# EUROPEAN PATENT APPLICATION

(11) **EP 4 596 499 A1**
(43) Date of publication of application: **06.08.2025**
(21) Application number: 23871922.3
(22) Date of filing: 13.09.2023
(51) Int. Cl.: C01G 25/02, B02C 17/20, C04B 35/486

(54) **CERAMIC SPHERICAL BODIES AND PRODUCTION METHOD FOR CERAMIC SPHERICAL BODIES**

(30) Priority: 30.09.2022 JP 2022157512; 14.02.2023 JP 2023020480
(71) Applicant: Toray Industries, Inc., Tokyo 103-8666 (JP)
(72) Inventor: SAWAGOSHI, Tatsuya, Otsu-shi Shiga 520-8558 (JP); TAKASE, Kohei, Otsu-shi Shiga 520-8558 (JP); KAMII, Yasuhiro, Otsu-shi Shiga 520-8558 (JP)
(74) Representative: Kador & Partner Part mbB
(86) International application number: PCT/JP2023/033356
(87) International publication number: WO 2024/070689

(57) **Abstract**

The main object of the present invention is to provide ceramic spheres that are resistant to breakage even when subjected to grinding or dispersing under high temperature conditions where the liquid temperature is 60°C or higher. The present invention provides ceramic spheres containing zirconia as primary component and CaO at a concentration of 3.5 mol% or more and 8.0 mol% or less and having an average diameter of 0.01 mm or more and 0.3 mm or less, a relative density of 99% or more, and a monoclinic crystal content of 1 vol% or less as measured by powder X-ray diffraction.

## Description

### TECHNICAL FIELD

The present invention relates to ceramic spheres and a method for the production thereof.

### BACKGROUND ART

Ball mills, vibration mills, sand mills, bead mills, and other grinding machines that are designed to grind material with grinding media are now in wide use for micro-grinding of powder in the field of electronic material production and for dispersion of pigments in the field of ink production. Ceramic sintered bodies containing zirconia as primary component, which excel in abrasion resistance and impact resistance, have been adopted as the grinding media (hereinafter occasionally referred to simply as "media") such as balls and beads for these grinding machines.

In recent years, for the purpose of improving the performance of ground materials or dispersed materials, a demand for finer grinding media has been increasing, and accordingly, the use of small diameter media with a particle size of 300 µm or less is expanding. As such small diameter media, ceramic spheres that are resistant to fracture even when subjected to grinding or dispersing in a normal temperature state or in a high water temperature state have been proposed, including a ceramic sphere containing zirconia as primary component wherein tetragonal crystal account for 80 vol% or more and 95 vol% or less while monoclinic crystal account for 5 vol% or less, and wherein the maximum height waviness Wz (µm) of the intersection line between the cross section of a sphere having a diameter of X/2 (µm), where X (µm) is the average diameter, and the surface of the sphere is 0.5% or more and 1.2% or less of the average diameter X (µm) (for example, see Patent document 1).

### PRIOR ART DOCUMENTS

### PATENT DOCUMENTS

[Patent document 1] International Publication WO 2022/044983

### SUMMARY OF THE INVENTION

### [Problems to be solved by the invention]

In recent years, in order to achieve increased productivity and dispersibility, there is a tendency to adopt grinding and dispersing conditions that require faster speeds and higher shear rates and maintain the dispersing media at higher temperatures. In particular, when grinding or dispersing is performed under high temperature conditions where the liquid temperature is 60°C or higher using a dispersing medium having hydroxy group, such as water, there tends to be a problem in that the medium deteriorates more easily and suffers defects such as cracking and chipping more seriously. Therefore, it has been necessary to relax the grinding or dispersing conditions so that the liquid temperature can be lower than 60°C or to replace the medium before breakage of the medium starts. Although the use of the ceramic spheres proposed in Patent document 1 serves to suppress the occurrence of breakage during grinding or dispersing, further suppression of breakage is desired particularly under high temperature conditions where the liquid temperature is 60°C or higher.

The main object of the present invention is to provide ceramic spheres that are unlikely to be broken even when subjected to grinding or dispersing under high temperature conditions where the liquid temperature is 60°C or higher.

### [Means of solving the problems]

As the main solution to the above problems, the present invention adopts the configuration described below.
(1) Ceramic spheres containing zirconia as primary component and CaO at a concentration of 3.5 mol% or more and 8.0 mol% or less, and having an average diameter of 0.01 mm or more and 0.3 mm or less, a relative density of 99% or more, and a monoclinic crystal content of 1 vol% or less as measured by powder X-ray diffraction.
(2) Ceramic spheres as set forth in paragraph (1), wherein the CaO content is 5.5 mol% or more and 8.0 mol% or less.
(3) Ceramic spheres as set forth in paragraph (1), wherein the CaO content is 3.5 mol% or more and less than 6.0 mol%.
(4) Ceramic spheres as set forth in any one of paragraphs (1) to (3), wherein the internal defect rate is 0.5% or less.
(5) Ceramic spheres as set forth in any one of paragraphs (1) to (4), wherein the surface roughness Sa is 0.02 µm or less.
(6) Ceramic spheres as set forth in any one of paragraphs (1) to (6), wherein monoclinic crystal account for 9 vol% or less after a pressure cooker test for 72 hours performed under the conditions of a temperature of 121°C and a humidity of 100%.
(7) Ceramic spheres as set forth in any one of paragraphs (1) to (6) designed for use as a grinding medium for bead mill devices and/or ball mill devices.
(8) A method for producing ceramic spheres as set forth in any one of paragraphs (1) to (7) comprising a granulation step for granulating a zirconia powder containing zirconia as primary component and CaO at a concentration of 3.5 mol% or more and 8.0 mol% or less, a sintering step for sintering the resulting granulated body, and an HIP step for subjecting the resulting sintered body to hot isostatic pressing, the steps being performed in this order.
(9) A method for producing ceramic spheres as set forth in paragraph (8), wherein the heating temperature in the HIP step is a temperature that is lower by 0°C to 75°C than the sintering temperature in the sintering step.

### EFFECT OF THE INVENTION

The ceramic spheres according to the present invention are characterized by being resistant to breakage even when subjected to grinding or dispersing under high temperature conditions where the liquid temperature is 60°C or higher.

### DESCRIPTION OF PREFERRED EMBODIMENTS

The ceramic spheres according to the present invention contain zirconia as primary component and CaO at a concentration of 3.5 mol% or more and 8.0 mol% or less. It should be noted that, for the present specification, the term "intermediate sintered body" may be used occasionally as a general term for sintered bodies of zirconia powder that are obtained as intermediates through at least one sintering step in the production process but does not fall under the category of ceramic spheres. However, ceramic spheres and intermediate sintered bodies may occasionally be referred collectively to simply as sintered bodies.

For the present specification, the expression "containing zirconia as primary component" means containing zirconia at a concentration of 90 mol% or more. From the viewpoint of improving strength, it is preferable to contain zirconia at a concentration of 94 mol% or more.

The ceramic spheres according to the present invention are characterized by containing CaO at a concentration of 3.5 mol% or more and 8.0 mol% or less. CaO acts as a stabilizer. If the CaO content is less than 3.5 mol%, the proportion of monoclinic crystal increases in the sintering step, and the proportion of monoclinic crystal further increases when grinding or dispersing is performed under high temperature conditions where the liquid temperature is 60°C or higher, which allows the medium to suffer breakage such as cracking or chipping more easily. If the CaO content is increased to 5.5 mol% or more, monoclinization (stress-induced phase transformation) that is caused by collisions between particles of ground or dispersed material can be suppressed more effectively. Therefore, from the viewpoint of further suppressing wear during wet grinding or dispersing, it is preferable to contain CaO at a concentration of 5.5 mol% or more and 8.0 mol% or less. On the other hand, if the CaO content is more than 8.0 mol%, the cubic crystal becomes the main crystal structure of the ceramic spheres, resulting in a significant decline in toughness. As a result, when grinding or dispersing is conducted under high temperature conditions where the liquid temperature is 60°C or higher, collisions between the ceramic spheres are more likely to occur, resulting in breakage such as cracking. If the CaO content is less than 6.0 mol%, the proportion of cubic crystals is suppressed, making it possible to further prevent cracking and chipping that are attributed to fissures caused by stresses that occur during grinding or dispersing. Therefore, from the viewpoint of further suppressing the occurrence of cracking and chipping during wet grinding or dispersing, it is preferable to contain CaO at a concentration of 3.5 mol% or more and less than 6.0 mol%.

The content (mol%) of each component in the ceramic spheres can be determined as described below. First, the ceramic spheres are broken under compression using a universal testing machine, and approximately 0.3 g of the broken pieces are placed in a platinum crucible and fused with potassium hydrogen sulfate. The resulting material is then dissolved in dilute nitric acid and diluted to volume, and each metal element component is quantified by ICP emission spectrometry. The measured amount of each metal element component is converted into the amount of its oxide and then divided by the molecular weight of each component to represent its amount in mol%.

Examples of known stabilizers useful for zirconia powder include Y₂O₃, CeO₂, Al₂O₃, and MgO, as well as CaO, of which Y₂O₃ has been used preferably. However, since Y₂O₃ contains yttrium, which is one of the rare-earth elements, its supply can become unstable depending on the international situation. For the present invention, CaO is adopted as the stabilizer, and accordingly, it is preferable that Y₂O₃ is not contained. Specifically, the content of Y₂O₃ is preferably 0.1 mol% or less.

The ceramic spheres according to the present invention have an average diameter of 0.01 mm or more and 0.3 mm or less. As described above, there has been a growing demand in recent years for ground material and dispersed material that are even finer than before, and the use of small diameter media has been expanding. However, if the average diameter is less than 0.01 mm, it will be difficult to separate ground or dispersed material from the ceramic spheres. On the other hand, if having an average diameter of 0.3 mm or less, preferably 0.30 mm or less, it is possible to obtain ground or dispersed material that is in a more uniform and finer state.

Here, the average diameter of ceramic spheres can be measured by photographing the ceramic spheres and then examining them using image analysis and measurement software. Specifically, the measurement is carried out as described below. An aggregate of ceramic spheres is photographed at a magnification of 10x to 200x under a digital microscope. Using image analysis and measurement software, the captured image is binarized on the basis of the brightness of the image under measurement. The binarized image is subjected to circular shape separation by the method of least squares means, and the diameter of each separated circle is calculated and adopted as the diameter of each individual ceramic sphere. A total of 1,000 ceramic spheres selected at random are observed, and the number average of their diameters is calculated and adopted as their average diameter.

To prepare ceramic spheres having an average diameter in the range specified above, a good method is to classify the ceramic spheres by means of screening classification or the like.

The ceramic spheres according to the present invention have a relative density of 99% or more. Relative density is an index that represents the degree of sintering and it is expressed as a percentage of the sintered density relative to the theoretical sintered density. If the relative density is less than 99%, it means that the degree of sintering of particles of the ceramic spheres is insufficient, possibly resulting in insufficient strength. Therefore, the medium is prone to be broken easily when used for grinding or dispersing under high temperature conditions where the liquid temperature is 60°C or higher. It is preferable for the relative density to be as close to 100% as possible. The relative density can be calculated by the equation (1) given below. Relative density (%) = (sintered density/theoretical sintered density) × 100

The sintered density is measured by the Archimedes' method stipulated in JIS Z8807:2012. The theoretical sintered density is calculated by the equation (1-1) given below. Theoretical sintered density [g/cm3] = 6.17 [g/cm3] - 0.04 [g/cm3·mol%] × molar concentration of CaO [mol%] For example, the theoretical sintered density is 6.03 g/cm³ when the CaO content is 3.5 mol%, 5.93 g/cm³ when it is 6.0 mol%, and 5.85 g/cm³ when it is 8.0 mol%.

Examples of methods for realizing a relative density of 99% or more include controlling the heating temperature and pressure within the preferred ranges that will be specified later during the HIP step in carrying out the method for producing the ceramic spheres that will be described later.

The ceramic spheres according to the present invention have a monoclinic crystal content of 1 vol% or less as measured by powder X-ray diffraction. If monoclinic crystal are present, deterioration is likely to occur starting from these monoclinic crystal if grinding or dispersing is carried out under conditions where the water temperature is high, and accordingly, the ceramic spheres become more prone to breakage. Therefore, from the viewpoint of prevention of breakage, it is preferable for the monoclinic crystal content to be as small as possible. However, in carrying out the method for producing the ceramic spheres, wet polishing is generally performed to smooth the surfaces, and stress is applied due to collisions among the ceramic spheres themselves and with the polishing material during the wet polishing step. As a result, it is usually impossible to reduce the monoclinic crystal content to an absolute zero in practice. In the wet polishing step, surface smoothing and a low monoclinic crystal content can be realized simultaneously if polishing is performed particularly under conditions where the energy from the polishing agent is kept low.

Examples of methods for realizing a monoclinic crystal content of 1 vol% or less include controlling the sintering temperature, sintering time, etc. in the sintering step, and the heating temperature etc. in the HIP step within the preferable ranges that will be specified later in carrying out the method for producing the ceramic spheres that will be described later.

For the ceramic spheres according to the present invention, it is preferable that the internal defect rate be 0.5% or less. Here, the term "internal defect" refers to cracks and pores that occur in a ceramic sphere. When the internal defect rate is 0.5% or less, it serves to prevent the ceramic spheres more strongly from suffering breakage in the case where grinding or dispersing is performed under high temperature conditions where the liquid temperature is 60°C or higher.

Here, the internal defect rate of ceramic spheres can be measured by the method described below. First, the ceramic spheres are abraded using an abrading machine until their size reaches 40% to 60% of the original diameter of the spheres, and then, finishing is performed by further polishing them for 10 minutes or more with diamond slurry having a particle size of 6 µm, thereby preparing a cross section. The cross section prepared above is observed under a digital microscope at a magnification of 10x to 200x. Here, a defect is defined as a structural defect whose maximum length is more than 20% of the diameter of the sphere. Two hundred ceramic spheres are selected at random and observed, and the proportion of ceramic spheres having defects is calculated and adopted as the internal defect rate.

Examples of methods for realizing an internal defect rate of 0.5% or less include controlling the heating temperature and pressure within the preferable ranges that will be specified later during the HIP step in carrying out the method for producing the ceramic spheres that will be described later.

For the ceramic spheres according to the present invention, it is preferable that the surface roughness Sa be 0.02 µm or less. When the surface roughness Sa is 0.02 µm or less, wear can be further suppressed during wet grinding or dispersing.

Here, the surface roughness Sa of the ceramic spheres can be measured under a laser microscope according to ISO 25178 (using the measuring method specified in JIS B 0681-6:2014).

Examples of good methods for realizing a surface roughness Sa of 0.02 µm or less include subjecting the ceramic spheres to surface polishing using a polishing device such as a barrel polishing machine or a bead mill polishing machine.

It is preferable for the ceramic spheres according to the present invention to have a monoclinic crystal content of 9 vol% or less after being subjected to pressure cooker test (PCT) for 72 hours at a temperature of 121°C and a humidity of 100%. The PCT test performed under such conditions is an accelerated test that simulates grinding or dispersing under high temperature conditions where the liquid temperature is 60°C or higher. If the monoclinic crystal content under these conditions is 9 vol% or less, it serves to prevent the monoclinic crystal content from increasing under high temperature conditions where the liquid temperature is 60°C or higher. Accordingly, conditions where the tetragonal crystal content is high can be maintained, and when stress is applied, tetragonal crystals are transformed into monoclinic crystals while undergoing volumetric expansion, thereby preventing cracks from occurring in the ceramic sphere. Therefore, even when grinding or dispersing is performed under high temperature conditions where the liquid temperature is 60°C or higher, breakage of the ceramic spheres can be suppressed more effectively.

Examples of methods for realizing a monoclinic crystal content of 9 vol% or less after the PCT test include adjusting the CaO content within the range specified above and manufacturing the ceramic spheres from preferable zirconia powder as described below used as raw material.

The ceramic spheres according to the present invention can be suitably used as a grinding medium in a bead mill device, ball mill device, or the like.

The ceramic spheres according to the present invention can be produced by preparing a raw material powder that contains zirconia as primary component and CaO at a concentration of 3.5 mol% or more and 8.0 mol% or less (hereinafter occasionally referred to simply as "raw material powder") and shaping the raw material powder containing zirconia as primary component into spheres, followed by sintering them. It is preferable that the method for manufacturing the ceramic spheres according to the present invention comprise a granulation step for granulating a zirconia powder containing zirconia as primary component and CaO at a concentration of 3.5 mol% or more and 8.0 mol% or less, a sintering step for sintering the resulting granulated body, and a HIP (hot isostatic pressing) step for subjecting the resulting sintered body to hot isostatic pressing, the steps being performed in this order. As described above, from the viewpoint of stronger suppression of wear during wet grinding or dispersing, it is preferable to use a raw material powder that contains CaO at a concentration of 5.5 mol% or more and 8.0 mol% or less, and from the viewpoint of stronger suppression of cracking and chipping during wet grinding or dispersing, it is preferable to use a raw material powder that contains CaO at a concentration of 3.5 mol% or more and less than 6.0 mol%.

First, in the granulation step, granulation of a raw material powder is carried out. It is preferable to use a rolling granulation method to ensure the formation of spheres. In the rolling granulation method, a raw material powder and a liquid binder that contains a binder and water are fed alternately into a rotating drum to form spherical fine particles, and then rotational motion is imparted to the fine particles and powder to allow the particles to grow, thereby providing a spherical granulated body.

It is preferable for the raw material powder to have a specific surface area of 20 m²/g or more as measured by the BET method because this makes it easier for the raw material powder to have a monoclinic crystal content in the aforementioned preferable range after being subjected to the PCT test.

The resulting granulated body contains moisture, and therefore, in order to remove moisture inside the granulated body, it is preferably subjected to a drying step prior to the sintering step. In the drying step, it is preferable to gradually reduce the moisture content in the granulated body by using a drying machine or the like.

Then, in the sintering step, the granulated body obtained through the granulation step and, if necessary, the drying step, is placed in a sagger or the like and fired in a firing furnace. Thus, the binder is removed and the raw material powder is bound, thereby yielding a spherical ceramic sintered body. The sintering temperature is preferably 1,250°C to 1,300°C, and the sintering time is preferably 1 to 5 hours. If the sintering temperature is 1,250°C or more, the relative density can be enhanced by increasing the degree of densification. On the other hand, if the sintering temperature is 1,300°C or less, it serves to moderately suppress the growth of primary particles and decrease the monoclinic crystal content. It also works more strongly to prevent the ceramic spheres from suffering breakage even when grinding or dispersing is performed under high temperature conditions where the liquid temperature is 60°C or higher.

Subsequently, in the HIP step, high temperature heat and isostatic pressure are applied simultaneously, and it acts to remove defects such as voids and cracks remaining in the ceramic sphere without altering their shape and to further reduce the internal defect rate. It also works more strongly to prevent the ceramic spheres from suffering breakage even when grinding or dispersing is performed under high temperature conditions where the liquid temperature is 60°C or higher. It should be noted that if the HIP step is performed before the sintering step, the gas that is used as the pressure medium may infiltrate the pores present in the granulated body, which is low in relative density, and accordingly, it cannot work to cause a force to compress the granulated body. Therefore, for the present invention, it is preferable to carry out the HIP step after the sintering step.

It is preferable to perform the HIP treatment in the temperature range of [Ts-75] (°C) to Ts, where Ts denotes the sintering temperature in the sintering step. If the heating temperature in the HIP step is controlled at [Ts-75] (°C) or more, it serves to allow the diffusion of ceramic powder such as zirconia to be sufficiently promoted during the HIP step, thereby further reducing the internal defect rate. The heating temperature is preferably [Ts-50] (°C) or more, more preferably [Ts-40] (°C) or more, and still more preferably [Ts-30] (°C) or more. On the other hand, if the heating temperature in the HIP step is maintained at Ts or less, it serves to moderately suppress the growth of primary particles, restrain the segregation of CaO at grain boundaries, and reduce the monoclinic crystal content. The heating temperature in the HIP step may be equal to the sintering temperature.

It is preferable for the pressure applied in the HIP step be 100 MPa or more. In order to maintain a high pressure state, it is preferable to perform the HIP treatment in an Ar gas atmosphere.

It is preferable to further subject the resulting ceramic spheres to surface polishing in order to reduce the surface roughness Sa, thereby providing a grinding medium having an even higher quality. Examples of useful surface polishing devices include barrel polishing device, ball mill polishing device, and bead mill polishing device. The use of a bead mill polishing device is preferable because it can perform polishing at a high peripheral speed.

Furthermore, it is preferable to adopt a classification step for classifying the resulting ceramic spheres. If such a classification step is included, it serves to allow them to have an average diameter, minimum diameter, maximum diameter, etc., in desired ranges. Examples of good classification methods include screening classification that uses a mesh sieve. The screening classification devices to use may have two sieves that are stacked so that relatively coarse powder with a larger particle size and relatively fine powder with a smaller particle size can be separated in a single operation.

### EXAMPLES

The present invention will now be illustrated in more detail with reference to examples, but it should not be construed as being limited to these examples. Evaluation methods used in the examples and comparative examples given below are as follows. It should be noted that evaluations of the calcia content, average diameter, relative density, monoclinic crystal content, internal defect rate, monoclinic crystal content after PCT test, and number of cracks in the hot-water no-load friction test were performed on ceramic spheres before surface polishing, and that the evaluations of the surface roughness and wear amount caused by wet dispersion of barium titanate oxide was conducted on ceramic spheres after surface polishing.

### (Calcia content)

Ceramic spheres prepared in each Example or Comparative example given below were broken under compression using a universal testing machine, and approximately 0.3 g of the broken pieces were placed in a platinum crucible and fused with potassium hydrogen sulfate. The resulting material was then dissolved in dilute nitric acid and diluted to volume, and each metal element was quantified by ICP emission spectrometry. The measured amount of each metal element was converted into the amount of its oxide and then divided by the molecular weight of each component to represent its amount in mol%.

### (Average diameter)

An aggregate of the ceramic spheres prepared in each Example or Comparative example was photographed at a magnification of 10x to 200x under a digital microscope (VHX-2000, manufactured by Keyence Corporation). Using image analysis and measurement software (WinROOF, supplied by Mitani Shoji Co., Ltd.), the captured image was binarized on the basis of brightness to separate the background and spheres in the image. The binarized image was subjected to circular shape separation by the method of least squares means, and the diameter of each separated circle was calculated and adopted as the diameter of each individual ceramic sphere. A total of 1,000 ceramic spheres selected at random were observed, and the number average of the diameters of the ceramic spheres was calculated and adopted as their average diameter.

### (Relative density)

The sintered density of the ceramic spheres prepared in each Example or Comparative example was measured by the Archimedes' method specified in JIS Z8807:2012. Besides, the theoretical sintered density was calculated by the equation (1-1) given below. Theoretical sintered density [g/cm3] = 6.17 [g/cm3] - 0.04 [g/cm3·mol%] × molar concentration of CaO [mol%] From the sintered density and the theoretical sintered density, the relative density of the ceramic spheres was calculated by the equation (1) given below. Relative density (%) = (sintered density/theoretical sintered density) × 100

### (Monoclinic crystal content)

Part of the ceramic spheres prepared in each Example or Comparative example were attached to a sample holder, and the diffraction intensities of crystals in different phases were measured by wide angle X-ray diffractometry (micro X-ray diffractometry). The measuring conditions used were as described below.
Measuring device: MiniFlex (registered trademark) 600 (manufactured by Rigaku Corporation)
X-ray source: CuKα ray (using multilayer mirror)
Output: 50 kV, 22 mA
Slit system: 100 µm diam. pinhole
Measurement range: 2θ = 23°-33°, 70°-77°
Elapsed time: 3,600 seconds/frame

The content of monoclinic zirconia was calculated from measurement results by the equation given below. Monoclinic crystal content (vol%) = [{Im(111) + Im(1-1-1)} /{ Im(111) + Im(1-1-1) + It+c(111) }] × 100 Here, I denotes the diffraction intensity. The subscripts m, t, and c respectively denote monoclinic crystal, tetragonal crystal, and cubic phases. The values in parentheses ( ) represent crystal indices.

### (Internal defect rate)

First, the ceramic spheres prepared in each Example or Comparative example were abraded using an abrading machine until their size reached 40% to 60% of the original diameter of the spheres, and then, finishing was performed by further polishing them for 10 minutes or more with diamond slurry having a particle size of 6 µm, thereby preparing cross sections. Each cross section prepared above was observed under a digital microscope VHX-2000 at a magnification of 10x to 200x. Here, a defect was defined as a structural defect whose maximum length was larger than 20% of the diameter of the sphere. A total of 200 ceramic spheres were selected at random and observed, and the proportion of ceramic spheres having defects was calculated and adopted as the internal defect rate.

### (Surface roughness Sa)

The surface-polished ceramic spheres prepared in Examples or Comparative examples 1 to 6, and 8 were observed under a laser microscope (VK-X-150, manufactured by Keyence Corporation) using a 150x objective lens. Digital zoom was adjusted so that the measurement area had a size of (X/3) µm × (X/3) µm, where X (µm) is the diameter of the ceramic spheres under measurement, and the arithmetic average height Sa was measured based on magnified observations. A total of 10 ceramic spheres were selected at random and their arithmetic average height Sa was measured. Then, the average of ten measurements was calculated and adopted as the surface roughness Sa.

### (Monoclinic crystal content after PCT Test)

A 10 g portion of the ceramic spheres prepared in each Example or Comparative example was packed in a container and put in a pressure cooker test machine (HIRAYAMA PC-242HS, manufactured by Hirayama Manufacturing Corporation), which was adjusted to a temperature of 121°C and a humidity of 100% and maintained for 72 hours for exposure test (PCT test). Then, after removing residual moisture from the ceramic spheres, the monoclinic crystal content was calculated by the same method as described in the section "(Monoclinic crystal content)."

### (Number of cracked spheres in hot-water no-load friction test)

A 138 g portion of the ceramic spheres prepared in Examples or Comparative Examples 1 to 6, and 8 was put in a bead mill device (PCM-LR, manufactured by Asada Iron Works Co., Ltd.), and 300 g of pure water was circulated at a flow rate of 200 mL/min while controlling the water temperature constantly at 80°C. Under these conditions, it was stirred for 10 hours at a circumferential speed of 12 m/s.

After the stirring step, the ceramic spheres were taken out and dried. Then, 1,000 ceramic spheres selected at random were observed under a digital microscope VHX-2000 at a magnification of 10x to 200x to determine whether there were cracks. The number of ceramic spheres found to have cracks was adopted as the number of cracked spheres. As the number of cracked spheres decreases, breakage will occur less frequently even when grinding or dispersing is performed under high temperature conditions where the liquid temperature is 60°C or higher.

### (Wear amount caused by wet dispersion of barium titanate oxide)

The surface-polished ceramic spheres prepared in Examples 1 and 5 to 8 or Comparative examples 1, 2, and 8 were subjected to the PCT test described in the section "(Monoclinic crystal content after PCT test)" and then, a 138 g portion thereof was put in a bead mill device (PCM-LR, manufactured by Asada Iron Works Co., Ltd.). Slurry was prepared by mixing 1,000 g of pure water at 20°C with 50 g of barium titanium(IV) oxide (manufactured by Sigma-Aldrich) and 10 g of a dispersant (sodium dodecylbenzenesulfonate, manufactured by Tokyo Chemical Industry Co. Ltd.). This slurry was subjected to wet dispersion for 3 hours by circulating it at a circumferential speed of 12 m/s. The resulting slurry was filtered through a membrane filter with a pore size of 5 µm, and then dried in a hot air dryer at 90°C for 24 hours. The resulting dried barium titanate oxide powder was ground in a mortar and examined using an X-ray fluorescence analyzer (ZSX PrimusII, manufactured by Rigaku Corporation) to identify the peaks attributed to titanium, barium, and zirconium. The ratio of the intensity peak area of zirconium to the intensity peak area of titanium and barium was determined and used to calculate the zirconia content (which represents the wear amount of the ceramic spheres) in the barium titanate oxide powder.

### [Example 1]

The raw material powder used was HSY-0481, manufactured by Daiichi Kigenso Kagaku Kogyo Co., Ltd., which had a specific surface area of 22 m²/g as measured by the BET method and had a characteristic such that the intended ceramic spheres had an oxide-converted molar ratio as represented by the formula calcia/zirconia = 4.2/95.8. This powder was granulated and shaped by the rolling granulation method to a size such that the resulting granulated body would have an average diameter of around 50 µm after the sintering step.

After drying the resulting granulated body, they were fired at 1,275°C for 4 hours to produce an intermediate sintered body (sintering step). Subsequently, the intermediate sintered body was subjected to HIP treatment at 1,275°C and 120 MPa for 1.5 hours (HIP step). The resulting sintered body was subjected to screening classification to provide ceramic spheres having an average diameter of 0.05 mm. The resulting ceramic spheres were then subjected to surface polishing with a polishing agent for 10 hours using a wet bead mill polishing device operating at a circumferential speed of 14 m/s.

### [Examples 2 to 3]

Except that the size of the granulated body prepared by the rolling granulation method and the implementation of the screening classification method were designed so that the average diameter was as shown in Table 1, the same procedure as in Example 1 was carried out to produce ceramic spheres and subject them to surface polishing.

### [Example 4]

Except that the heating temperature adopted in the HIP step was as shown in Table 1, the same procedure as in Example 1 was carried out to produce ceramic spheres and subject them to surface polishing.

### [Examples 5 to 8]

Except that the raw material powder used had a characteristic such that the intended ceramic spheres had an oxide-converted molar ratio as shown in Table 1, the same procedure as in Example 1 was carried out to produce ceramic spheres and subject them to surface polishing.

### [Comparative example 1]

Except that the HIP step was not implemented, the same procedure as in Example 1 was carried out to produce ceramic spheres and subject them to surface polishing.

### [Comparative examples 2 to 4]

Except that the heating temperature adopted in the HIP step was as shown in Table 1, the same procedure as in Example 1 was carried out to produce ceramic spheres and subjected them to surface polishing.

### [Comparative example 5]

Except that the sintering temperature adopted in the sintering step and the heating temperature adopted in the HIP step were as shown in Table 1, the same procedure as in Example 1 was carried out to produce ceramic spheres and subject them to surface polishing.

### [Comparative example 6]

Except that the HIP treatment was carried out at 1,250°C and 120 MPa for 1.5 hours, followed by firing conducted at 1,275°C for 4 hours, the same procedure as in Example 1 was carried out to produce ceramic spheres and subject them to surface polishing.

### [Comparative example 7]

Except that the raw material powder used had a specific surface area of 22 m²/g as measured by the BET method and had a characteristic such that the intended ceramic spheres had an oxide-converted molar ratio as represented by the formula calcia/zirconia = 8.6/91.4, the same procedure as in Example 1 was carried out to produce ceramic spheres. When the resulting ceramic spheres were subjected to surface polishing using a wet bead mill polishing device, the ceramic spheres suffered cracking.

### [Comparative example 8]

Yttrium chloride was added to zirconium oxychloride so that their oxide-converted molar ratio in the intended ceramic spheres would be yttria/zirconia = 2.8/97.2, and a raw material powder having a specific surface area of 9 m²/g as measured by the BET method was produced by the coprecipitation method.

Then, the aforementioned raw material powder was processed by the rolling granulation method, where rolling granulation was continued to provide granulated particles having a size such that their average diameter after the sintering step would be around 50 µm.

After drying the resulting granulated particles, they were fired at 1,400°C for 2 hours to produce an intermediate sintered body (sintering step). Subsequently, the intermediate sintered body was subjected to HIP treatment at 1,380°C and 120 MPa for 1.5 hours (HIP step). For the resulting sintered body, the same procedure as in Example 1 was carried out to produce ceramic spheres and subject them to surface polishing.

Features of each Example and evaluation results obtained are shown in Table 1. It should be noted that the spheres produced in Comparative examples 4 and 5 were destroyed during polishing and therefore, it was impossible to measure their internal defect rate. In Comparative example 7, furthermore, the spheres suffered cracking during surface polishing and it seemed self-evident that they would crack if subjected to the hot-water no-load friction test. Therefore, the measurement of surface roughness was not implemented.

**[Table 1-1]**

| | order of steps | sintering temperature [°C] | HIP heating temperature [°C] |
|---|---|---|---|
| Example 1 | granulation →sintering→HIP | 1,275 | 1,275 |
| Example 2 | granulation →sintering→HIP | 1,275 | 1,275 |
| Example 3 | granulation →sintering→HIP | 1,275 | 1,275 |
| Example 4 | granulation →sintering→HIP | 1,275 | 1,200 |
| Example 5 | granulation →sintering→HIP | 1,275 | 1,275 |
| Example 6 | granulation →sintering→HIP | 1,275 | 1,275 |
| Example 7 | granulation →sintering→HIP | 1,275 | 1,275 |
| Example 8 | granulation →sintering→HIP | 1,275 | 1,275 |
| Comparative example 1 | granulation →sintering | 1,275 | - |
| Comparative example 2 | granulation →sintering→HIP | 1,275 | 1,150 |
| Comparative example 3 | granulation →sintering→HIP | 1,275 | 1,300 |
| Comparative example 4 | granulation →sintering→HIP | 1,275 | 1,350 |
| Comparative example 5 | granulation →sintering→HIP | 1,350 | 1,300 |
| Comparative example 6 | granulation →HIP→sintering | 1,275 | 1,275 |
| Comparative example 7 | granulation →sintering→HIP | 1,275 | 1,275 |
| Comparative example 8 | granulation →sintering→HIP | 1,400 | 1,380 |

**[Table 1-2]**

| | stabilizer | |
|---|---|---|
| | type | concentration [mol%] |
| Example 1 | calcia | 4.2 |
| Example 2 | calcia | 4.2 |
| Example 3 | calcia | 4.2 |
| Example 4 | calcia | 4.2 |
| Example 5 | calcia | 4.6 |
| Example 6 | calcia | 5.6 |
| Example 7 | calcia | 6.6 |
| Example 8 | calcia | 7.6 |
| Comparative example 1 | calcia | 4.2 |
| Comparative example 2 | calcia | 4.2 |
| Comparative example 3 | calcia | 4.2 |
| Comparative example 4 | calcia | 4.2 |
| Comparative example 5 | calcia | 4.2 |
| Comparative example 6 | calcia | 4.2 |
| Comparative example 7 | calcia | 8.6 |
| Comparative example 8 | yttria | 2.8 |

**[Table 1-3]**

| | evaluation results | | | |
|---|---|---|---|---|
| | average diameter [mm] | relative density [%] | monoclinic crystal content [vol%] | internal defect rate [%] |
| Example 1 | 0.05 | 99 | 1 | 0.0 |
| Example 2 | 0.11 | 99 | 1 | 0.0 |
| Example 3 | 0.30 | 99 | 1 | 0.0 |
| Example 4 | 0.05 | 99 | 1 | 3.0 |
| Example 5 | 0.05 | 99 | 1 | 0.0 |
| Example 6 | 0.05 | 99 | 0 | 0.0 |
| Example 7 | 0.05 | 99 | 0 | 0.0 |
| Example 8 | 0.05 | 99 | 0 | 0.0 |
| Comparative example 1 | 0.05 | 95 | 1 | 20.0 |
| Comparative example 2 | 0.05 | 98 | 0 | 10.0 |
| Comparative example 3 | 0.05 | 99 | 21 | 0.0 |
| Comparative example 4 | 0.05 | 99 | 70 | - |
| Comparative example 5 | 0.05 | 95 | 68 | - |
| Comparative example 6 | 0.05 | 96 | 1 | 17.0 |
| Comparative example 7 | 0.05 | 99 | 0 | 0.0 |
| Comparative example 8 | 0.05 | 99 | 1 | 0.0 |

**[Table 1-4]**

| | evaluation results | | | |
|---|---|---|---|---|
| | surface roughness [µm] | monoclinic crystal content after PCT [vol%] | number of cracks in hot-water no-load friction test [number] | Zr wear amount caused by wet dispersion of barium titanate [ppm] |
| Example 1 | 0.01 | 7 | 0 | 1,000 |
| Example 2 | 0.01 | 7 | 0 | - |
| Example 3 | 0.01 | 7 | 0 | - |
| Example 4 | 0.01 | 6 | 2 | - |
| Example 5 | 0.01 | 3 | 0 | 650 |
| Example 6 | 0.01 | 0 | 0 | 400 |
| Example 7 | 0.01 | 0 | 2 | 390 |
| Example 8 | 0.01 | 0 | 3 | 410 |
| Comparative example 1 | 0.01 | 9 | 23 | 1,200 |
| Comparative example 2 | 0.01 | 8 | 13 | 1,100 |
| Comparative example 3 | 0.03 | - | 20 | - |
| Comparative example 4 | 0.04 | - | 28 | - |
| Comparative example 5 | 0.04 | - | 35 | - |
| Comparative example 6 | 0.01 | - | 24 | - |
| Comparative example 7 | - | 0 | - | - |
| Comparative example 8 | 0.01 | 35 | 13 | 4,000 |

## Claims

1. Ceramic spheres comprising zirconia as primary component and CaO at a concentration of 3.5 mol% or more and 8.0 mol% or less and having an average diameter of 0.01 mm or more and 0.3 mm or less, a relative density of 99% or more, and a monoclinic crystal content of 1 vol% or less as measured by powder X-ray diffraction.

2. Ceramic spheres as set forth in claim 1, wherein the CaO content is 5.5 mol% or more and 8.0 mol% or less.

3. Ceramic spheres as set forth in claim 1, wherein the CaO content is 3.5 mol% or more and less than 6.0 mol%.

4. Ceramic spheres as set forth in either claim 1 or 2, wherein the internal defect rate is 0.5% or less.

5. Ceramic spheres as set forth in either claim 1 or 2, wherein the surface roughness Sa is 0.02 µm or less.

6. Ceramic spheres as set forth in either claim 1 or 2, wherein monoclinic crystal account for 9 vol% or less after a pressure cooker test performed for 72 hours at a temperature of 121°C and a humidity of 100%.

7. Ceramic spheres as set forth in either claim 1 or 2 designed for use as a grinding medium for bead mill devices and/or ball mill devices.

8. A method for producing ceramic spheres as set forth in either claim 1 or 2 comprising a granulation step for granulating zirconia powder containing zirconia as primary component and CaO at a concentration of 3.5 mol% or more and 8.0 mol% or less, a sintering step for sintering the resulting granulated body, and an HIP step for subjecting the resulting sintered body to hot isostatic pressing, the steps being performed in this order.

9. A method for producing ceramic spheres as set forth in claim 8, wherein the heating temperature in the HIP step is a temperature that is lower by 0°C to 75°C than the sintering temperature in the sintering step.
